# EUROPÄISCHE PATENTANMELDUNG

(11) **EP 3 382 000 A1**
(43) Veröffentlichungstag der Anmeldung: **03.10.2018**
(21) Anmeldenummer: 18163404.9
(22) Anmeldetag: 22.03.2018
(51) Int. Cl.: C11D 1/62, C11D 3/20, C11D 3/30, C11D 3/48, A01N 33/04, A01N 33/12, A01N 39/00, A01P 1/00

(54) **DESINFEKTIONS- UND REINIGUNGSMITTEL**

(30) Priorität: 29.03.2017 DE 102017106717
(71) Anmelder: Witty GmbH & Co. KG, 86424 Dineklscherben (DE)
(72) Erfinder: Braun, Brigitte, 86368 Gersthofen (DE); Wiedemann, Regina, 86179 Augsburg (DE); Golz, Gregor, Dr., 86157 Augsburg (DE); van Heyden, Hendrik, Dr., 86157 Augsburg (DE); Meder, Hans Joachim, Dr., 88453 Erolzheim (DE)
(74) Vertreter: Charrier Rapp & Liebau

(57) **Zusammenfassung**

Bereitgestellt wird ein flüssiges Desinfektions- und Reinigungsmittel, das ein quaternäres Ammoniumsalz im Überschuss zu einem Amin und ein Phenoxyalkanol umfasst. Das flüssige Desinfektions- und Reinigungsmittel ist vielseitig einsetzbar, bspw. zur Desinfektion und Reinigung von mikrobiell kontaminierten Oberflächen.

## Beschreibung

Die Erfindung betrifft ein flüssiges Desinfektions- und Reinigungsmittel als Konzentrat sowie Verdünnungen davon. Das erfindungsgemäße Desinfektions- und Reinigungsmittel ist zur Desinfektion und Reinigung von Oberflächen vorgesehen, die mikrobiell kontaminiert sind.

Die Desinfektion von Oberflächen ist auf vielen gewerblichen Bereichen und im Haushalt unabdingbar, da der Kontakt mit krankheitserregenden Mikroorganismen eine Gesundheitsgefahr für den Menschen darstellt. Insbesondere in medizinischen Einrichtungen, in denen Menschen unmittelbar mit solchen Einflüssen exponiert sein können, wie Krankenhäuser, Sanatorien und Arztpraxen ist eine dauerhafte Reinigung und Desinfektion aller Oberflächen der Einrichtung unverzichtbar. Dies gilt auch für sportliche Einrichtungen, wie Schwimmbäder, Sporthallen und Trainingscenter oder für Betreuungseinrichtungen, wie Kindergärten, Kinderkrippen oder Seniorenheime. Besondere Hygienemaßstäbe werden auch für Gaststätten, Großküchen, den zugehörigen Lagerräumen, für Einrichtungen der Lebensmittelverarbeitung und der zugehörigen Logistik, wie im Fleisch- und Fischwarensektor, Anlagen der zugehörigen Kühlkette, und der Konfektionierung angelegt.

In allen diesen Fällen wird ein breit wirksames Desinfektions- und Reinigungsmittel gefordert, das sowohl eine gute Reinigungswirkung, auch im verdünnten Zustand, aufweist, als auch schädliche Keime und Erreger weitgehend beseitigt. Ein weiteres Einsatzgebiet für Desinfektions- und Reinigungsmittel sind sanitäre Einrichtungen, sowohl im gewerblichen Bereich wie auch im Haushalt. Das Desinfektions- und Reinigungsmittel soll einfach und gefahrlos verwendet werden können und zudem möglichst rückstandslos und ohne Schaden für die behandelten Oberflächen einsetzbar sein.

Die zu beseitigenden oder zumindest einzudämmenden Mikroorganismen können Bakterien, Viren, Pilze, Einzeller und andere Formen von Kleinlebewesen sein. Insbesondere sind diesbezüglich Bakterien, Enterokokken, Staphylokokken, Streptokokken, Bacillus subtilis, Enterobacter aerogenes, Escherichia coli, Legionella pneumophila, Listeria monocytogenas, Mycobacterium tuberculosis, Pseudomonas aeruginosa, Salmonella enteritidis, Salmonella typhimurium, Staphylococcus aureus, Streptococcus faecalis, Vibrio parahaemolyticus, Yersinia pestis, und zudem Mikroorganismen der Gattungen Clostridium, Corynebacterium, Klebsiella, Neisseria, Shigella, Enterococcus hirae, oder Mycobacterium terrae zu nennen. Virale Kontaminationen können von den Erregern Adenovirus, EBV, HIV, HSV, Influenzavirus, Norovirus, Polyomavirus, Papilloma-Virus, Tollwutvirus, Poliovirus, Mod. Vacciniavirus (MVA), Bov. Virusdiarrhoe Virus (BVDV), Simian-Virus 40, u.a. stammen. Schaderregende Pilze stammen häufig von den Gattungen Aspergillus, wie Aspergillus brasiliensis, Botrytis, Dematiaceae, Fusarium und Trichoderma. Auch Hefen, wie Candida albicans, können zu pathogenen Wirkungen führen, so dass von einem Desinfektions- und Reinigungsmittel auch eine levurozide Wirkung erwünscht ist. Einzeller und Protozoen können ebenfalls als Krankheitserreger auftreten. Bekannt sind die Erreger von Malaria und Amöbenruhr.

Besonders hervorzuheben sind Aggregationen von Mikroorganismen und organischer Debris, wie sie unter anderem in Sportanlagen, wie Schwimmbädern vorkommen können, insbesondere in Form sogenannter Biofilme. Biofilme können auch in Lagerräumen und auf Gefäßen von Lebensmitteln und anderen Gegenständen, die längere Zeit kontaminationsfähigen Substanzen ausgesetzt sind, auftreten, vor allem an weniger zugänglichen Stellen. Hier sind neben der Desinfektionswirkung auch eine gute Reinigungskraft sowie eine entsprechende Applikation für das Desinfektions- und Reinigungsmittel gefordert.

Aus der US 5185145-A ist ein Desinfektionsmittelkonzentrat bekannt, das als Wirkstoff Phenoxyethanol in Kombination mit einer kationischen Verbindung enthält. Dieses bekannte Desinfektionsmittel-Konzentrat soll wirtschaftlich und zum anderen über längere Zeit lagerfähig und somit stabil sein und insbesondere mykobakterizid und viruzid wirken. Es hat sich allerdings gezeigt, dass dieses Konzentrat in vielerlei Hinsicht noch verbessert werden kann.

Die Aufgabe der vorliegenden Erfindung ist daher die Bereitstellung eines Desinfektions- und Reinigungsmittels, das im Wesentlichen aus Phenoxyethanol und einer quaternären Ammoniumverbindung besteht und das gegenüber bekannten Ausführungsformen über weitere Vorteile verfügt.

Überraschenderweise wurde gefunden, dass durch einen mäßigen, die möglichen Nachteile des Einsatzes von Diaminoverbindungen berücksichtigenden Zusatz einer nachstehend ausgewiesenen Diaminoverbindung, im folgenden einfach "Amin" genannt, weitere Vorteile für ein Desinfektions- und Reinigungsmittel erzielt werden können.

Die vorliegende Erfindung stellt ein flüssiges Desinfektions- und Reinigungsmittel bereit, das die nachstehenden Komponenten umfasst:
a) Benzyl-C₆₋₂₀-alkyldimethyl-, Chloride
b) Phenoxy-(C₁-C₈)-alkanol,
c) H₂N-R¹-N(R²)-R³-NH₂, wobei R¹ und R³ unabhängig voneinander C₂-C₅-Alkylen bedeuten und R² C₅-C₂₀-Alkyl bedeutet.
Erfindungsgemäß sind dabei die Gewichtsteile von Komponente a) gleich oder größer als jene von Komponente c).

Zudem wird ein Verfahren zur Herstellung dieses Desinfektions- und Reinigungsmittels bereitgestellt, wobei die genannten Komponenten a) bis c) in beliebiger Reihenfolge mit Hilfs- oder Zusatzstoffen und einem Verdünnungsmittel miteinander vermischt werden.

Außerdem betrifft die Erfindung die Verwendung des erfindungsgemäßen Desinfektions- und Reinigungsmittels zur gleichzeitigen Desinfektion und Reinigung von insbesondere glatten Oberflächen.

Vorteilhafte Weiterbildungen und Ausgestaltungen der Erfindung sind in den Unteransprüchen angegeben.

Die Erfindung wird nachstehend anhand detaillierter Ausführungsbeispiele beschrieben.

Alle Konzentrationsangaben sind auf das Gewicht bezogen, sofern nichts anderes ausgewiesen wurde. Angaben von Gewichtsanteilen (in Gew.%) beziehen sich auf die unverdünnten, reinen Stoffe ohne Einrechnung der möglichen Verdünnung bei einem Handelsprodukt, sofern nichts anderes ausgewiesen wurde.

Im Folgenden werden die Bestandteile des Wirkstoffkomplexes und anschließend weitere, optionale Bestandteile des erfindungsgemäßen Desinfektions- und Reinigungsmittels beschrieben, wie z.B. Farb- oder Duftstoffe, Verdünnungs- oder Lösemittel, Tenside, etc..

Komponente a) des erfindungsgemäßen Desinfektions- und Reinigungsmittels sind quaternäre Ammoniumverbindungen der Form Benzyl-C₆₋₂₀-alkyldimethyl-, Chloride (INCI-Name). Diese Verbindungen sind auch unter dem Namen Benzalkoniumchlorid bekannt. Die Verbindungen haben die Formel: 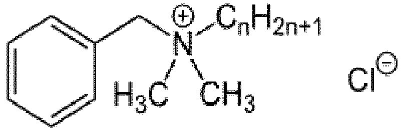 worin n = 6 bis 20, vorzugsweise n = 8, 10, 12, 14, 16, 18 (einzeln oder im Gemisch von einer oder mehreren Komponenten) ist, vor allem jedoch n = 12 bis 16 ist. In der vorliegenden Erfindung wird ein Benzyl-C₁₂₋₁₆-alkyldimethyl-, Chloride (CAS-Nr. 68424-85-1) bevorzugt. Aufgrund der Struktur aus hydrophiler quaternärer Gruppe und hydrophobem langkettigem Ring (unter Berücksichtigen der Benzylgruppe) verhält sich das Benzalkoniumchlorid (nachstehend einfach BAC genannt) auch in gewissem Umfang wie ein Tensid, so dass bei einigen Ausführungsformen des erfindungsgemäßen Desinfektions- und Reinigungsmittels auf ein zusätzliches Tensid verzichtet werden kann.

BAC kann auch im Gemisch mit anderen quaternären Ammoniumverbindungen eingesetzt werden. Es gibt Anzeichen, dass Mischungen von BAC mit quaternären Ammoniumverbindungen zu einer synergistischen mikrobiziden Wirkung führen. Als aussichtsreichste Vertreter werden lineare Alkylammonium-Verbindungen, wie Dodecylammoniumchlorid, Alkyltrimethylammoniumsalze, wie Cetyltrimethylammoniumbromid, Dialkyldimethylammoniumsalze, wie Dilauryldimethylammoniumchlorid, Imidazolium-Verbindungen oder Pyridinium-Verbindungen, wie Cetylpyridiniumchlorid, angeführt. Diese können in einer Menge von 0,5 bis 20 Gew.-%, vorzugsweise 1 bis 15 Gew.-%, bevorzugter 3 bis 10 Gew.-% und insbesondere 4 bis 8 Gew.-% eingesetzt werden.

Komponente b) des erfindungsgemäßen Desinfektions- und Reinigungsmittels ist ein Phenoxyalkanol, insbesondere Phenoxy-(C₁-C₈)-alkanol: 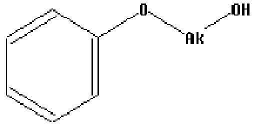 worin Ak einen Alkylenrest mit 1 bis 8 Kohlenstoffatomen darstellt, oder Ak eine lineare oder verzweigte Alkylenkette mit 3 bis 8 Kohlenstoffatome bedeutet, die ggf. eine Doppel- oder Dreifachbindung enthalten kann, wobei ggf. eines oder mehrere Wasserstoffatome des vorstehend definierten Alkylenrests Ak gegen ein Halogenatom, eine Gruppe -CN, - COOR' oder -OR', worin R' ein H oder ein C₁-C₆-Alkylrest ist, oder -OH substituiert sein können. Der Phenylring kann ggf. mit einem oder mehreren der für Ak angeführten Substituenten substituiert sein. Bekanntester Vertreter ist Phenoxyethanol (CAS Nr. 122-99-6). Phenoxypropanol ist ebenfalls für den erfindungsgemäßen Zweck einsetzbar. Phenoxy-(C₁-C₈)-alkanole zeichnen sich durch eine für ein Mikrobizid gute Verträglichkeit aus.

Komponente c) des erfindungsgemäßen Desinfektions- und Reinigungsmittels ist eine Aminoverbindung der folgenden Formel:

H₂N-R¹-N(R²)-R³-NH₂,

wobei R¹ und R³ unabhängig voneinander C₂-C₅-Alkylen bedeuten und R² C₅-C₂₀-Alkyl bedeutet, nachstehend auch "Amin" genannt. Vorzugsweise sind R¹ und R³ ein Propylenrest und R² ist ein Dodecylrest. R² kann auch ein Gemisch mehrerer Reste R₂, wie von Pentyl, Hexyl, Octyl, Nonyl, Decyl, Undecyl, Tridecyl, Tetradecyl, Pentadecyl, Hexadecyl, Heptadecyl, Octadecyl, Nonadecyl oder Eicosyl, sein. Bevorzugt ist N-(3-Aminopropyl)-N-dodecylpropan-1,3-diamin (CAS Nr. 2372-82-9).

Die Komponenten a) (BAC), b) (Phenoxyalkanol) und c) (Amin) des erfindungsgemäßen Desinfektions- und Reinigungsmittels werden gemäß der Erfindung so miteinander vermischt, dass die beiden aminischen Komponenten BAC und "Amin" in gleicher Menge oder BAC gegenüber "Amin" im Überschuss vorliegt. Es hat sich überraschend gezeigt, dass dadurch Nachteile bei der Verwendung eines ein BAC, ein Phenoxyalkanol und ein "Amin" enthaltendes Desinfektions- und Reinigungsmittels vermieden werden können. Insbesondere kann ein nachteiliges Verhalten in Bezug auf physikalische Parameter bei der Dosierung des erfindungsgemäßen Desinfektions- und Reinigungsmittels vermieden werden. Weiterhin erweist sich das erfindungsgemäße Desinfektions- und Reinigungsmittels vorteilhaft bei der Beseitigung von Gummiabrieb auf Böden. Weitere vorteilhafte Desinfektions- und Reinigungsergebnisse können insbesondere in Bezug auf Fette und Öle, Stärke, Eiweiß, Ruß, Silikate und Gips beobachtet werden.

Es hat sich zudem gezeigt, dass das erfindungsgemäße Desinfektions- und Reinigungsmittel eine angemessene Schaumbildung zeigt. Diese hält für den Desinfektions- und Reinigungsvorgang ausreichend lange an, sodass es für den Benutzer für einen ausreichenden Zeitraum ersichtlich ist, wo bereits behandelt wurde. Anschließend trocknet das erfindungsgemäße Desinfektions- und Reinigungsmittel sichtbar rückstandslos. Bei einer zu hohen Menge an schaumbildender Komponente bleibt der Schaum bestehen und es wurde ein sichtbarer, unakzeptabler Rückstandsfilm beobachtet.

Erste Ergebnisse mit dem erfindungsgemäßen Desinfektions- und Reinigungsmittel zeigten eine sehr gute Wirkung gegenüber Adenoviren.

Das erfindungsgemäße Desinfektions- und Reinigungsmittel ist außerdem unauffällig bis angenehm im Geruch. Es besteht nicht nur dieser olfaktorische Vorteil, das erfindungsgemäße Desinfektions- und Reinigungsmittel übt augenscheinlich auch eine geringere Gesundheitsbelastung aus.

Bezüglich des neutralen Mittels muss kein nachträgliches Abspülen erfolgen. Trotzdem erzeugt es bei ähnlicher und besserer Wirkung in geringerem Maße rutschige Oberflächen, verglichen mit Desinfektions- und Reinigungsmitteln anderer Zusammensetzung. Es wird auch eine optimale Benetzung der zu desinfizierenden Fläche beobachtet.

Durch die erfindungsgemäße Einstellung des Gewichtsverhältnisses von BAC und "Amin" können ferner die Tröpfchengröße des applizierten Mittels bei der Applikation des Mittels mit einem Düsensprühgerät vorteilhaft eingestellt werden. Außerdem wird eine durch eine zu hohe Aminmenge bedingte Spannungsrisskorrosion bei Applizierung auf Kunststoffoberflächen und/oder Metalloberflächen zumindest weitgehend vermieden.

Hinsichtlich der Korrosion an Metallen wurde ermittelt, dass saure Varianten des erfindungsgemäßen Desinfektions- und Reinigungsmittels gegenüber Chromoberflächen eine überraschend geringe Korrosion hervorrufen.

Es ist zu erwähnen, dass Bestandteile eines gattungsgemäßen Reinigungs- und Desinfektionsmittels nachteiligen Einfluss auf die Umgebung haben können. So wurde durch Untersuchungen festgestellt, dass salzartige, basische und saure Bestandteile von Reinigungs- und Desinfektionsmitteln die Korrosion fördern können, stark lösende Bestandteile Kunststoffoberflächen angreifen können und stark komplexierende Mittel Metalloberflächen angreifen können. Es ist bei Untersuchungen auch gefunden worden, dass Bestandteile von Reinigungsmitteln Klebeverbindungen angreifen können, bestimmte Inhaltsstoffe Allergien auslösen oder Spannungsrisskorrosion an der Oberfläche verursachen können, auf die das Reinigungs- und Desinfektionsmittel aufgetragen worden ist. Aus diesem Grund ist eine sorgfältig abgestimmte Formulierung, insbesondere bezüglich der wirksamen Reinigungs- und Desinfektions-Komponenten, anzustreben, um die genannten nachteiligen Wirkungen zu vermeiden. In diesem Zusammenhang ist auch zu erwähnen, dass die Formulierung so abgestimmt sein muss, dass sie für die Benutzer des Mittels oder später für die Nutzer der desinfizierten und gereinigten Flächen keine wesentliche gesundheitliche Gefahr darstellen.

Die vorstehend beschriebenen Mischungen von BAC, Phenoxyalkanol und "Amin" können als Konzentrat verwendet werden. Es ist allerdings für spezifische Anwendungsfälle angebracht, diese Mischungen aus BAC, Phenoxyalkanol und "Amin" durch Zusatz von weiteren Stoffen anwendungsfreundlicher zu gestalten. So können die detersiven Eigenschaften von BAC durch den Zusatz von Tensiden, insbesondere kationischen, amphoteren oder nichtionischen Tensiden unterstützt werden. Außerdem ist häufig ein Komplexbildner von Vorteil, der insbesondere Metallrückstände auf den Oberflächen löst. Beim Einsatz auf metallischen Oberflächen wird vorzugsweise ein Korrosionsinhibitor eingesetzt. Schließlich können Farbstoffe und/oder Duftstoffe für ästhetische Zwecke eingesetzt werden.

Folgende Zusatzstoffe können den wirksamen Komponenten a), b) und c) des erfindungsgemäßen Desinfektions- und Reinigungsmittels vorteilhaft zugesetzt werden:
Um die Reinigungskraft des erfindungsgemäßen Desinfektions- und Reinigungsmittels zu verstärken, können dem Mittel Tenside zugesetzt werden. Hierfür eignen sich amphotere, nichtionische oder kationische Tenside bzw. anionische Tenside je nach Milieu, d.h. je nach pH-Wert.

Amphotere Tenside, die für die vorliegende Erfindung verwendbar sind, schließen Betaine ein, die die allgemeine Formel RN⁺(R¹)₂R²-COO- aufweisen, worin R eine hydrophobe Einheit darstellt, ausgewählt aus der Gruppe, bestehend aus Alkylgruppen, die 8 bis 22 Kohlenstoffatome, vorzugsweise 10 bis 18 Kohlenstoffatome, enthalten, Alkylaryl- und Arylalkylgruppen, die 10 bis 22 Kohlenstoffatome enthalten, und wie oben definierte Alkylgruppen, unterbrochen durch Amid-, Ester- oder Etherbindungen; wobei jedes R¹ Wasserstoff ist oder eine Alkylgruppe, die 1 bis 3 Kohlenstoffatome enthält, und R² eine Alkylengruppe ist, die 1 bis etwa 6 Kohlenstoffatome enthält. Sulfobetaine, wie Cocoamidopropylhydroxysultain, sind auch geeignet.

Beispiele für bevorzugte Betaine sind Dodecyldimethylbetain, Cetyldimethylbetain, Dodecylamidopropyldimethylbetain, Tetradecyldimethylbetain, Tetradecylamidopropyldime-thylbetain und Dodecyldimethylammoniumhexanoat. Zu erwähnen ist Cocoamidopropylbetain, erhältlich als Tegobetain F®, vertrieben von Th. Goldschmidt AG Deutschland. Bevorzugt ist vor allem von AkzoNobel Ampholak YJH-40, nämlich Octyliminodipropionat:

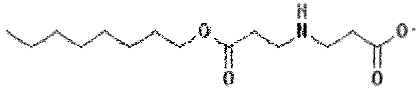

Erläuternd für kationische Tenside sind C₈-C₂₂-Alkyl-C₁-C₄-dialkylammoniumsalze, wie Cetyldimethylammoniumchlorid, Stearyldimethylammoniummethosulfat, Oleyldiethylammoniumphosphat und Lauryldimethylammoniumborat. Besonders bevorzugt ist Cetrimoniumchlorid, das einen generischen Begriff für Cetyldimethylammoniumchlorid bedeutet.

Viele kationische Tenside sind auf dem Fachgebiet bekannt und fast jedes kationische Tensid mit mindestens einer langkettigen Alkylgruppe von etwa 10 bis 24 Kohlenstoffatomen ist zur Verwendung in der vorliegenden Erfindung geeignet. Solche Verbindungen werden z.B. in "Cationic Surfactants", Jungermann, 1970, oder Ullmann's Encyclopedia of Industrial Chemistry, "Surfactants", Kurt Kosswig, 2002, beschrieben.

Quaternäre Tenside, die geeignet sind, werden ausgewählt aus der Gruppe:
(i) nicht-cyclische quaternäre Ammoniumsalze der Formel: 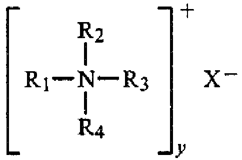 worin R₁ eine Alkyl- oder Alkenyl-Gruppe mit 8 bis 22 Kohlenstoffatomen ist; R² eine Alkyl-Gruppe mit 1 bis 3 Kohlenstoffatomen ist; R³ und R₄ ausgewählt sind aus der Gruppe bestehend aus R₁ und R₂; X ein Anion ist, ausgewählt aus der Gruppe, bestehend aus Halogeniden, Sulfaten, Alkylsulfaten mit 1 bis 3 Kohlenstoffatomen in der Alkylkette und Acetaten; und y die Wertigkeit von X ist.
   Ein Beispiel für diese Tenside ist Adogen 442 von Evonik.
(ii) substituierte Polyaminsalze der Formel: 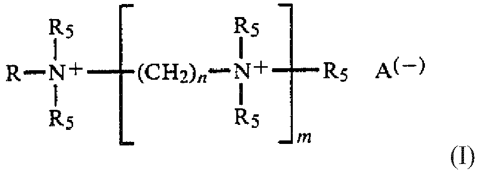 worin R eine Alkyl- oder Alkenyl-Gruppe mit 10 bis 22 Kohlenstoffatomen ist, wobei die R₅-Reste, die gleich oder verschieden sein können, jeweils ein Wasserstoffatom, eine (C₂H₄O)ₚH oder (C₃H₆O)_{q}H, oder eine C₁₋₃ Alkyl-Gruppe bedeuten, worin jeder von p und q eine Zahl ist, sodass (p+q) 25 nicht übersteigt, m von 1 bis 9 ist, n von 2 bis 6 ist, und A⁽⁻⁾ eines oder mehrere Anionen mit einem Gesamtladungsausgleich der Stickstoffatome bedeutet;
(iii) Polyaminsalze der Formel I, worin R Wasserstoff oder eine C₁₋₄-Alkyl-Gruppe ist, jedes R⁵ Wasserstoff oder eine C₁₋₄ Alkyl-Gruppe ist, n von 2 bis 6 ist und m nicht weniger als 3 ist;
(iv) C₈₋₂₅ Alkyl-imidazoliniumsalze; und
(v) C₁₂₋₂₀ Alkyl-pyridiniumsalze.

Einige der vorstehend genannten kationischen Tenside haben deutlichen mikrobiziden Charakter und können zur Unterstützung der mikrobiziden Wirkung des Gemischs von BAC, Phenoxyalkanol und "Amin" eingesetzt werden, insbesondere z.B. Cetylpyridiniumchlorid.

Nichtionische Tenside bzw. Niotenside können bspw. ausgewählt sein aus Alkoxylaten oder Phenylalkoxylaten, wie bspw. Ethoxylaten und/oder Propoxylaten von Fettalkoholen oder Fettaminen, deren Alkylgruppe eine gesättigte oder ungesättigte, gerad- oder verzweigtkettige Alkylgruppe mit 8 bis 18, vorzugsweise 12 bis 14 Kohlenstoffatomen, ist. Hierbei werden unter Fettalkoholen und Fettaminen Verbindungen mit einem Alkylrest mit mindestens 8 C-Atomen verstanden. Derartige Substanzen können als Reinsubstanzen mit einem definierten Alkylrest oder aus Produktgemischen bestehen, wie sie aus natürlichen Fetten und Ölen erhalten werden. Dabei können die Alkoxylate auch endgruppenverschlossen sein, d.h. an der terminalen OH-Gruppe nochmals verethert sein. Beispiele derartiger Niotenside sind Octanol x 4 EO (EO = Ethylenoxid) und Octanol x 4,5 EO-Butylether. Weitere nichtionische Tenside anderen Aufbaus sind Alkylglucoside, wie Polysorbat 20 (Tween 20), Alkylpolyglucoside, Octylphenolethoxylate, wie (Triton X-100) und Nonylphenolethoxylate, wie Nonoxinol-9.

Erläuternde, jedoch nicht begrenzende Beispiele für anionische Tenside schließen die Nachstehenden ein:
(1) Alkylbenzolsulfonate, worin die Alkylgruppe 9 bis 15 Kohlenstoffatome, vorzugsweise 11 bis 14 Kohlenstoffatome geradkettiger oder verzweigtkettiger Konfiguration enthält. Besonders bevorzugt ist ein lineares Alkylbenzolsulfonat, das etwa 12 Kohlenstoffatome in der Alkylkette enthält.
(2) Alkylsulfate, erhalten durch Sulfatieren eines Alkohols mit 8 bis 22 Kohlenstoffatomen, vorzugsweise 12 bis 16 Kohlenstoffatomen. Die Alkylsulfate haben die Formel ROSO₃-M⁺, worin R die C₈₋₂₂-Alkylgruppe darstellt und M ein ein- und/oder zweiwertiges Kation darstellt.
(3) Paraffinsulfonate mit 8 bis 22 Kohlenstoffatomen, vorzugsweise 12 bis 16 Kohlenstoffatomen, in der Alkyleinheit.
(4) Olefinsulfonate mit 8 bis 22 Kohlenstoffatomen, vorzugsweise 12 bis 16 Kohlenstoffatomen. Besonders bevorzugt ist Natrium-C₁₄-C₁₆-olefinsulfonat, erhältlich als Bioterge AS 40®.
(5) Alkylethersulfate, abgeleitet von einem Alkohol mit 8 bis 22 Kohlenstoffatomen, vorzugsweise 12 bis 16 Kohlenstoffatomen, ethoxyliert mit weniger als 30, vorzugsweise weniger als 12 Mol Ethylenoxid. Besonders bevorzugt ist Natriumlaurylethersulfat, gebildet aus 2 Mol mittlerer Ethoxylierung, kommerziell erhältlich als Standopol ES-2®.
(6) Alkylglycerylethersulfonate mit 8 bis 22 Kohlenstoffatomen, vorzugsweise 12 bis 16 Kohlenstoffatomen, in der Alkyleinheit.
(7) Fettsäureestersulfonate der Formel: R¹CH(SO₃-M⁺)CO₂R², worin R¹ gerades oder verzweigtes Alkyl von etwa C₈ bis C₁₈, vorzugsweise C₁₂ bis C₁₆, darstellt und R² gerades oder verzweigtes Alkyl von etwa C₁ bis C₆, vorzugsweise vorwiegend C₁, darstellt und M⁺ ein ein- oder zweiwertiges Kation wiedergibt.
(8) Sekundäre Alkoholsulfate mit 6 bis 18, vorzugsweise 8 bis 16 Kohlenstoffatomen.
(9) Fettacylisethionate mit 10 bis 22 Kohlenstoffatomen, wobei Natriumcocoylisethionat bevorzugt ist.
(10) Mono- und Dialkylsulfosuccinate, worin die Alkylgruppen jeweils im Bereich von 3 bis 20 Kohlenstoffatomen liegen.
(11) Alkanoylsarcosinate entsprechend der Formel RCON(CH₃)CH₂CH₂CO₂M, worin R Alkyl oder Alkenyl von etwa 10 bis etwa 20 Kohlenstoffatomen darstellt und M ein in Wasser lösliches Kation, wie Ammonium, Natrium, Kalium und Trialkanolammonium, darstellt. Besonders nützlich ist Natriumlauroylsarcosinat.

Die erfindungsgemäßen Desinfektions- und Reinigungsmittel können des weiteren Korrosionsschutzmittel enthalten, insbesondere wenn die Mittel auf korrosionsanfälligen Materialien eingesetzt werden. Zu diesen Materialien gehören Stähle, Verbindungen aus Stählen, einschl. Edelstähle, Kupfer und Legierungen davon, wie Bronze oder Messing, Zink und Verzinkungen, Aluminiumgegenstände und aus diesen oder anderen Metallen bestehende Legierungen.

Geeignete Korrosionsschutzmittel sind Cyclohexylamin, Benzotriazol, Diammoniumphosphate, Dilithiumoxalate, Dimethylaminomethylpropanol, Dikaliumoxalat, Dikaliumphosphat, Dinatriumphosphat, Dinatriumpyrophosphat, Dinatriumtetrapropenylsuccinat, Hexoxyethyldiethylammonium, Phosphate, Nitromethan, Kaliumsilicate, Natriumaluminate, Natriumhexametaphosphat, Natriummetasilikat, Natriummolybdat, Natriumnitrit, Natriumoxalat, Natriumsilikate, Stearamidopropyldimethicon, Tetrakaliumpyrophosphat, Tetranatriumpyrophosphat, Triethanolamin, Triisopropanolamin. Mercaptane oder Thiole einschließlich Thionaphthol und Thioanthranol, feinverteilte Aluminiumfettsäuresalze, wie Aluminiumtristearat, Hydrazine, Benzotriazol, Phosphorsäureester, Silikate, 2-Butin-1,4-diol, insbesondere 2-Propyn-1-ol/Propylenoxid-Kondensat, wie Korantin PP, 2-Propyn-1-ol, propoxyliert von BASF.

Komplexbildner zeigen eine unterstützende Wirkung in Bezug auf die Reinigung und Desinfektion. Vor allem werden durch Komplexbildner für den Desinfektionsvorgang und den Reinigungsvorgang schädliche Schwermetallionen komplexiert. Andererseits wirken bestimmte Komplexbildner auch mikrobizid und können mit den in der erfindungsgemäßen Formulierung vorhandenen mikrobiziden Mitteln synergistisch in Wechselwirkung treten.

Geeignet sind für den erfindungsgemäßen Zweck bspw. die folgenden Komplexbildner: Aminotrimethylenphosphonsäure, Betaalanindiessigsäure, Calcium-Dinatrium-EDTA, Zitronen-Säure, Cyclodextrin, Cyclohexandiamintetraessigsäure, Diammoniumcitrat, Diammonium-EDTA, Diethylentriamin-Pentamethylen-Phosphon-Säure, Dikalium-EDTA, Dinatrium-Azacycloheptan-Diphosphonat, Dinatrium-EDTA, Dinatrium-Pyrophosphat, EDTA, Etidron-Säure, Galactar-Säure, Glucon-Säure, Glucuron-Säure, HEDTA, Hydroxypropyl-Cyclodextrin, Methyl-Cyclodextrin, Pentakalium-Triphosphat, Pentanatrium-Aminotrimethylen-Phosphonat, Pentanatrium-Ethylendiamin-Tetramethylen-Phosphonat, Pentanatrium-Pentetat, Pentanatrium-Triphosphat, Pentetin-Säure, Phytin-Säure, Kalium-Citrat, Kalium-EDTMP, Kalium-Gluconat, Kalium-Polyphosphat, Kalium-Trisphosphonomethylamin-Oxid, Ribon-Säure, Natrium-Chitosan-Methylen-Phosphonat, Natrium-Citrat, Natrium-Diethylentriamin-Pentamethylen-Phosphonat, Natrium-Dihydroxyethylglycinat, Natrium-EDTMP, Natrium-Gluceptat, Natrium-Gluconat, Natrium-Glycereth-1-Polyphosphat, Natrium-Hexametaphosphat, Natrium-Metaphosphat, Natrium-Metasilikat, Natrium-Phytat, Natrium-Polydimethylglycinophenolsulfonat, Natrium-Trimetaphosphat, TEA-EDTA, TEA-Polyphosphat, TetrahydroxyethylEthylendiamin, Tetrahydroxypropyl-Ethylendiamin, Tetrakalium-Etidronat, TetrakaliumPyrophosphat, Tetranatrium-EDTA, Tetranatrium-Etidronat, Tetranatrium-Pyrophosphat, Trikalium-EDTA, Trinatrium-Dicarboxymethyl-Alaninat, Trinatrium-EDTA, Trinatrium-HEDTA, Trinatrium-NTA und Trinatrium-Phosphat.

Bevorzugt sind die Salze von Ethylendiamintetraessigsäure (EDTA), Salze von Nitrilotriessigsäure, Diethanolglycin-Natrium, Ethanoldiglycin-Dinatriumsalz, Tetranatrium-N,N-bis(carboxylatomethyl)-L-glutamat (GLDA), Hydroxyethylethylenediamintriacetate (HEDTA). Besonders bevorzugt sind die Komplexbildner GLDA-Na4, (CAS Nr. 51981-21-6) und Methylglycindiacetat (MGDA).

Das erfindungsgemäße Desinfektions- und Reinigungsmittel kann zudem zusätzlich zu Wasser andere Lösemittel, z.B. Alkanole, wie Ethanol, iso- und/oder n-Propanol, iso- und/oder n-Butanol, Glykole, z.B. Ethylenglykol oder Propylenglykol (1,2 und/oder 1,3), Glykolether, wie Cellosolve, oder Carbitole enthalten.

Die erfindungsgemäßen Desinfektions- und Reinigungsmittel können in Form von Konzentraten oder in Form von gebrauchsfertigen Lösungen ("Ready-To-Use-Produkte") hergestellt werden. Konzentrate bieten den Vorteil, dass sie besonders effektiv für den Transport vom Hersteller zum Kunden sind. Ready-To-Use-Produkte dagegen sind in der Anwendung vorteilhaft, da sie vor Gebrauch nicht weiter verdünnt werden müssen. In den Konzentraten werden die Wirkstoffe, nämlich die Komponenten a ("BAC"), b (Phenoxy-Alkanol) und c ("Amin"), bevorzugt in einem Anteil von ca. 1 - 15 Gew.%, bezogen auf das Gesamtgewicht des Mittels, eingesetzt. Die Konzentrate können durch Zugabe eines geeigneten Lösemittels, insbesondere Wasser, zu gebrauchsfertigen Lösungen verdünnt werden. Der Gewichtsanteil der Komponenten a, b, und c liegt in den gebrauchsfertigen Lösungen bevorzugt im Bereich von 0,01 bis 10 Gew. %, bevorzugt im Bereich von 0,05 bis 5 Gew. %, und insbesondere im Bereich von 0,5 bis 1 Gew. %, bezogen auf das Gesamtgewicht der gebrauchsfertigen Lösung.

Der Gesamtwirkstoffgehalt, also die Summe der Gewichtsanteile aus den Komponenten a), b) und c), beträgt in den Konzentraten bevorzugt 10 - 30 Gew.%, bezogen auf das Gesamtgewicht des Konzentrats. In den (verdünnten) Ready-To-Use-Produkten liegt der Gesamtwirkstoffgehalt entsprechend bevorzugt bei ca. 0,05 Gew.% - 3 Gew.%. Der Anteil der einzelnen Komponenten a, b und c am Gesamtgewicht der gebrauchsfertigen Lösung beträgt dann bevorzugt jeweils ca. 0,005 Gew.% - 1,5 Gew.%."

Die erfindungsgemäßen Desinfektions- und Reinigungsmittel können mit verschiedenen pH-Milieus formuliert werden. Unterschiedliche pH-Milieus sind für unterschiedliche Anwendungen zweckmäßig. Um die jeweiligen pH-Werte einzustellen, können geeignete Säuren und Basen verwendet werden. Geeignete Basen sind z.B. Natronlauge, Kalilauge, die Hydroxide von Li, Ca und Zn, Ammoniak und organische basische Amine, wie Dipropylamin. Geeignete Säuren sind neben den gängigen Mineralsäuren, wie HCl, Schwefelsäure, Salpetersäure und Phosphorsäure, auch deren organische Derivate, wie Methanschwefelsäure oder Alendron- oder Etidronsäure. Desweiteren sind organische Säuren geeignet, wie Zitronensäure, die gleichzeitig als Komplexbildner wirken kann, Ameisensäure, Essigsäure, Weinsäure, Maleinsäure, Itaconsäure, Propionsäure oder Disäuren, wie Oxalsäure, Adipinsäure oder Äpfelsäure.

Die sauren und alkalischen Ausführungsformen der Erfindung können auch zusammen bzw. wechselseitig (d.h. nacheinander) verwendet werden. So kann bspw. ein Reinigungsprozess besteht aus einem ersten Schritten mit einer alkalischen Reinigung unter Verwendung eines alkalischen Reinigungsmittels gemäß der Erfindung und einem zweiten Schritt mit einer sauren Reinigung und Desinfektion unter Verwendung eines sauren Reinigungsmittels gemäß der Erfindung sowie mit einem abschließenden Spülschritt, der ein Abspülen mit Wasser umfasst, durchgeführt werden. Der Vorteil einer solchen wechselseitigen Verwendung liegt darin, dass unlösliche Rückstände nicht entstehen oder - sofern der verwendete Reiniger nach dem ersten Schritt eintrocknet - die entstehenden Rückstände durch die wechselseitige Anwendung sofort wieder entfernt werden.

Es wurde festgestellt, dass beim Vermischen der Komponenten a) bis c) mit einem oder mehreren der vorstehend genannten Zusatzstoffe synergistische Verbesserungen bezüglich der mikrobiziden Wirkung, der Beseitigung von Gummiabrieb auf Böden, der Düsengängigkeit und der Tröpfchengröße bei einer Applikation des Mittels mit einem Düsensprühgerät, der Spannungsrisskorrosion bei Anwendung auf Kunststoff- oder Metalloberflächen sowie bezüglich der Reinigungs- und Desinfektionsqualität und weiteren vorstehend beschriebenen Vorteilen und Eigenschaften gemäß nachstehend angeführter Reinigungsszenarien beobachtet werden können. Entsprechend dem eingestellten pH-Wert können die erfindungsgemäßen Desinfektions- und Reinigungsmittel auf verschiedenen Anwendungsgebieten eingesetzt werden. Mögliche Einsatzgebiete und eine hierfür zweckmäßige Applikation des Mittels auf eine zu behandelnde Oberfläche werden nachstehend erläutert.

In einer alkalischen Ausführungsform des erfindungsgemäßen Desinfektions- und Reinigungsmittels weist dieses einen pH-Wert von >9, vorzugsweise >10, bevorzugter >11, insbesondere >12 und vor allem >13 auf. Diese alkalische Ausführungsform des erfindungsgemäßen Desinfektions- und Reinigungsmittels kann jeweils 1 bis 15 Gew.-% BAC, Phenoxyethanol oder "Amin" enthalten, wobei gemäß der Erfindung der Gewichtsanteil von BAC gegenüber "Amin" überwiegt. Vorzugsweise liegt das Gewichtsverhältnis von BAC gegenüber "Amin" (BAC : "Amin") im Bereich von 1 : 0,10 bis 0,99, vorzugsweise im Bereich von 1 : 0,2 bis 0,8, bevorzugter im Bereich von 1 : 0,3 bis 0,7, vor allem im Bereich von 1 : 0,4 bis 0,6. Insgesamt liegt das Gemisch in einer Menge von 2 bis 18 Gew.-%, vorzugsweise 8 bis 17 Gew.-% und insbesondere 12 bis 15 Gew.-% vor. Die alkalische Ausführungsform des erfindungsgemäßen Desinfektions- und Reinigungsmittel kann zur Einstellung des gewünschten pH-Werts eine oder mehrere der vorstehend angeführten Basen in einer Menge enthalten, die in der Regel im Bereich von 1 bis 10 Gew.-% liegt.

Anstelle der oder zusätzlich zu den vorstehend genannten Basen können auch basische organische Verbindungen aus der vorstehend genannten Kategorie der Tenside oder Komplexbildner eingesetzt werden. Optional können Tenside zu der vorstehend genannten Formulierung zugegeben werden, wobei amphotere, nicht-ionische oder kationische Tenside oder Mischungen davon eingesetzt werden können. Diese werden in einer Menge von 0 bis 10 Gew.-%, vorzugsweise 1 bis 9 Gew.-%, bevorzugter 2 bis 8 Gew.-% und insbesondere 4 bis 6 Gew.-% eingesetzt. Bevorzugt sind amphotere Tenside, z.B. AkzoNobel Ampholak YJH-40, d.h. Octyliminodipropionat. Aus Gründen der Unterstützung der Reinigung durch Builderwirkung und Metallkomplexierung wird dem Mittel ggf. ein Komplexbildner zugesetzt. Dieser kann aus den vorstehend genannten Arten ausgewählt werden, sofern er mit dem basischen Milieu kompatibel ist. Bevorzugt ist der Komplexbildner BASF Trilon M, Methylglycindiessigsäure (MGDA-Na3). Der Komplexbildner wird in einer Menge von 0 bis 10 Gew.-%, vorzugsweise 1 bis 9 Gew.-%, bevorzugter 2 bis 8 Gew.-% und insbesondere 4 bis 6 Gew.-% eingesetzt. Gegebenenfalls enthält das alkalische erfindungsgemäße Desinfektions- und Reinigungsmittel bis zu 8 Gew.-% eines Korrosionsschutzmittels. Optional können Duftstoffe und Farbstoffe in einer Menge von bis zu 1 Gew.-% eingesetzt werden. Entsprechend der Verwendung kann die vorstehend genannte Mischung aus Wirkstoffen und den optionalen Zusätzen mit Wasser auf 100 Gew.-% aufgefüllt werden, in der Regel sind dies 60 bis 80 Gew.-% des fertigen erfindungsgemäßen Desinfektions- und Reinigungsmittels oder ein Teil des Wasseranteils kann mit einem weiteren, wie vorstehend beschriebenen Lösemittel aufgefüllt werden, um die Löseeigenschaften des erfindungsgemäßen alkalischen Desinfektions- und Reinigungsmittels zu verbessern. Als (zusätzliche) Lösemittel sind Glykole bevorzugt.

Die alkalischen Ausführungsformen des erfindungsgemäßen Desinfektions- und Reinigungsmittels sorgen für hervorragende Desinfektion und Reinigung in einem Schritt. Die Mittel können unverdünnt auf stark verschmutzte Stellen aufgetragen werden. In der Regel werden sie aber zur großflächigen Behandlung von Oberflächen verdünnt eingesetzt, wobei je nach festgestellter oder vermuteter mikrobieller Belastung und angestrebter Desinfektionszeit folgende Richtwerte für die Behandlungsdauer bzw. für die Einwirkzeiten gelten:
Hohe Belastung / Niedrige Belastung:
- Bakterizid EN 13697: 2 %/5min
- Levurozid EN 13697 : 1 %/5min
- Norovirus EN 14476: 2%/15 min
- Adenovirus EN 14476: 2%/15min
- Warzenvirus/SV40 EN 14476: 2%/5min
- Begrenzte Viruzidie nach EN 14476-2017: 2%,15min

Hinsichtlich der Reinigungswirkung ist die alkalische Ausführungsform des erfindungsgemäßen Desinfektions- und Reinigungsmittels in der Lage Fette, Öle, Ruß, Eiweiß, Kunststoffe, Gummiabrieb, alkalische lösliche anorganische Rückstände, wie Kalk, Kalkseifen, Silikate, Sulfate, von der zu behandelnden Oberfläche zu entfernen.

Ein bevorzugtes Reinigungsverfahren, bspw. für die Reinigung und Desinfektion von Böden, umfasst die nachstehenden Schritte:
- Auftragen auf die Oberfläche durch Sprühen, Wischen (Mop) oder Auftragen mittels eines Fahrautomaten (Produkt schäumt gut sichtbar, schäumt im Fahrautomaten aber nicht über);
- Optional zusätzliche mechanische Bearbeitung per Hand (Schrubber, Bürste, etc.) oder mittels eines Fahrautomaten (Bürste, Pad);
- Abspülen mit Leitungswasser (Mittel lässt sich rückstandsfrei abspülen)

Die Materialverträglichkeit wurde für verschiedene Oberflächenmaterialien wie Kunststoffe oder Metalle getestet, wobei sich das alkalische Ausführungsbeispiel des erfindungsgemäßen Desinfektions- und Reinigungsmittels auf allen alkalibeständigen Oberflächen, insbesondere auf Fliesen, Fugenmörtel, Edelstahl und Kunststoffen als anwendbar erwiesen hat, ohne dass das Mittel die Oberfläche angegriffen hat.

Der Wirkstoff N-(3-Aminopropyl)-N-dodecylpropan-1,3-diamin ("Amin") ist als sekundäres Amin leicht protonierbar und wirkt als Base. Dadurch wird das Molekül in eine positiv geladene Form, nämlich in ein Ammoniumion überführt. Dieses zeigt gegenüber vielen Mikroorganismen eine verminderte Wirksamkeit im Vergleich zur nichtprotonierten Amin-Form. Aus diesem Grunde sind gemäß Stand der Technik keine Desinfektionsprodukte bekannt, die "Amin" als Wirkstoff enthalten und auf einen pH-Wert kleiner 9 eingestellt sind. Es hat sich nun überraschend gezeigt, dass auch bei Reduzierung des Anteils an pH-sensiblem "Amin" und durch Einsatz der erfindungsgemäßen Gewichtsanteile der Komponenten a), b) und c) Rezepturen erzeugen lassen, die auch in pH-Bereichen <9 hervorragende Wirksamkeiten gegenüber vielen Bakterien, Pilzen und Viren aufweisen. Die erfindungsgemäßen Rezepturen sind zudem leicht zu formulieren und lagerstabil über mindestens ein Jahr. Die Möglichkeit, im oben beschriebenen 3-Wirkstoffsystem auch sehr gut wirksame Rezepturen mit pH < 9 zu erzeugen eröffnet zahlreiche zusätzliche Vorteile in der Anwendung der erfindungsgemäßen Desinfektionsprodukte. So können beispielweise Haut-neutrale Produkte formuliert werden. Zusätzlich lassen sich saure und neutrale Kombinationsprodukte generieren, die besonders gute Eigenschaften zur Entfernung von Kalk oder organischen Verschmutzungen aufweisen. Durch Senkung des pH-Wertes lässt sich zudem der Dampfdruck des "Amins" erhöhen und so die Geruchsbelästigung für den Anwender reduzieren.

Ein saures Ausführungsbeispiel des erfindungsgemäßen Desinfektions- und Reinigungsmittels besitzt einen pH-Wert von <5, vorzugsweise <4, bevorzugter <3 und insbesondere <2. Diese sauren Ausführungsbeispiele des erfindungsgemäßen Desinfektions- und Reinigungsmittel können 1 bis 15 Gew.-% BAC, Phenoxyethanol oder "Amin" enthalten (bezogen auf das Gesamtgewicht des als Konzentrat vorliegenden Desinfektions- und Reinigungsmittels), wobei der Anteil an BAC gegenüber "Amin" überwiegt. Insgesamt liegt der Gesamtgewichtsanteil der wirksamen Komponenten a ("BAC"), b (Phenoxy-Alkanol) und c ("Amin") dabei bevorzugt im Bereich von 2 bis 16 Gew.-%, und insbesondere 4 bis 8 Gew.-%, bezogen auf das Gesamtgewicht des als Konzentrat vorliegenden Desinfektions- und Reinigungsmittels.

Vorzugsweise ist das Gewichtsverhältnis von BAC gegenüber "Amin" (BAC : "Amin") im Bereich von 1 : 0,10 bis 0,99, vorzugsweise im Bereich 1 : 0,2 bis 0,8, bevorzugter im Bereich 1 : 0,25 bis 0,7, vor allem im Bereich 1 : 0,3 bis 0,5. Das saure Ausführungsbeispiel des erfindungsgemäßen Desinfektions- und Reinigungsmittel kann zur Einstellung des pH-Werts eine oder mehrere der vorstehend angeführten Säuren enthalten, wobei die Menge der Säure zur Einstellung eines gewünschten pH-Werts in der Regel im Bereich von 1 bis 20 Gew.-% liegt. Bevorzugt kann eine Sulfonsäure eingesetzt werden, insbesondere Amidosulfonsäure (CAS Nr. 5329-14-6). Anstelle einer Säure oder zusätzlich dazu können auch saure organische Verbindungen aus der vorstehend genannten Kategorie der Tenside oder Komplexbildner eingesetzt werden. Optional können Tenside zu der vorstehend genannten Formulierung zugegeben werden, wobei amphotere, nicht-ionische, kationische oder anionische Tenside oder Mischungen davon eingesetzt werden können. Diese werden in einer Menge von 0 bis 10 Gew.-%, vorzugsweise 1 bis 9 Gew.-%, bevorzugter 2 bis 8 Gew.-% und insbesondere 4 bis 6 Gew.-% eingesetzt. Bevorzugt sind amphotere Tenside, z.B. AkzoNobel Ampholak YJH-40, d.h. Octyliminodipropionat. Aus Gründen der Unterstützung der Reinigung durch Builderwirkung und Metallkomplexierung wird dem Mittel ggf. ein Komplexbildner zugesetzt. Dieser kann aus den vorstehend genannten Arten ausgewählt werden, sofern er mit dem sauren Milieu kompatibel ist. Bevorzugt ist der Komplexbildner BASF Trilon M, Methylglycindiessigsäure (MGDA-Na3). Der Komplexbildner wird in einer Menge von 0 bis 10 Gew.-%, vorzugsweise 1 bis 9 Gew.-%, bevorzugter 2 bis 8 Gew.-% und insbesondere 4 bis 6 Gew.-% eingesetzt. Gegebenenfalls enthält das saure erfindungsgemäße Desinfektions- und Reinigungsmittel bis zu 8 Gew.-% eines Korrosionsschutzmittels. Bevorzugt ist ein 2-Propyn-1-ol enthaltendes Korrosionsschutzmittel, insbesondere Korantin PP, 2-Propyn-1-ol, propoxyliert, (CAS Nr. 38172-91-7) von BASF. Dieses kann in einer Menge von 2 bis 4 Gew.-%, vorzugsweise 2,5 bis 3,5 Gew.-% eingesetzt werden. Optional können Duftstoffe und Farbstoffe in einer Menge von bis zu 1 Gew.-% zu ästhetischen Zwecken eingesetzt werden. Entsprechend der Verwendung kann die vorstehend genannte Mischung aus den Wirkstoffen (Komponenten a), b) und c)) und optionalen Zusatzstoffen mit Wasser auf 100 Gew.-% aufgefüllt werden. In der Regel sind dies 60 bis 80 Gew.-% des fertigen erfindungsgemäßen Desinfektions- und Reinigungsmittels. Ein Teil des Wasseranteils kann auch mit einem weiteren, wie vorstehend beschriebenen, Lösemittel aufgefüllt werden, um die Löseeigenschaften des erfindungsgemäßen sauren Desinfektions- und Reinigungsmittels zu verbessern. Bevorzugte Lösemittel sind Alkohole und Glykole.

Die sauren Ausführungsbeispiele der erfindungsgemäßen Desinfektions- und Reinigungsmittel können bspw. als saurer, chromverträglicher Sanitärreiniger mit desinfizierender Wirkung eingesetzt werden. Hierfür wird ein saures Ausführungsbeispiel des erfindungsgemäßen Desinfektions- und Reinigungsmittels als
- gebrauchsfertiges Produkt,
- mit einer sehr kurzen Einwirkzeit (von bevorzugt 1 - 5 min) bereit gestellt,
- das über ein hohes Kalklösevermögen verfügt,
- chrom- und edelstahlverträglich ist (gilt ggf. auch für eloxiertes Aluminium)
- und das ggf. mit einem geeigneten Tuchspendersystem konfektioniert werden kann.

Die sauren Ausführungsbeispiele der erfindungsgemäßen Desinfektions- und Reinigungsmittel können zweckmäßig unverdünnt auf die betroffenen Stellen aufgetragen werden, können aber unter Umständen auch verdünnt eingesetzt werden. Für die angestrebte Desinfektionszeit gelten folgende Richtwerte:
- Bakterizid EN 13697: konz/1min
- Levurozid EN 13697 : konz/1min
- DVV begrenzt viruzid: konz/1min
(DVV = Deutsche Vereinigung zur Bekämpfung der Viruskrankheiten)

Bezüglich der Reinigungswirkung verfügen die sauren Ausführungsbeispiele der erfindungsgemäßen Desinfektions- und Reinigungsmittel über ein hervorragendes Kalk- und Kalkseifenlösevermögen.

Ein bevorzugtes Anwendungsverfahren für ein saures Ausführungsbeispiel des erfindungsgemäßen Desinfektions- und Reinigungsmittel umfasst die nachstehenden Schritte:
- Auftragen des Mittels als Konzentrat auf eine Oberfläche im Sanitärbereich (wie z.B. Waschbecken, WCs, Armaturen, Duschen, Badewannen, etc.) durch Sprühen oder Wischen (Tuch);
- Kurz einwirken lassen (0,5 bis 2 Minuten)
- Abspülen mit Leitungswasser (Mittel lässt sich leicht und rückstandsfrei abspülen).

Selbst wenn nicht gründlich abgespült wird, hat sich gezeigt, dass Chrom- und Edelstahlarmaturen nicht beschädigt werden.

Die Materialverträglichkeit wurde für verschiedene Materialien im Sanitärbereich getestet, insbesondere auf Fliesen und verchromten Oberflächen, wobei sich keine Probleme ergeben haben.

Ein weiteres Ausführungsbeispiel eines erfindungsgemäßen Desinfektions- und Reinigungsmittels weist einen pH-Wert im neutralen Bereich, insbesondere im Bereich von pH = 5 bis 9, vorzugsweise 6 bis 8,5 und insbesondere 7 bis 8 auf. Diese zumindest im Wesentlichen neutralen Desinfektions- und Reinigungsmittel gemäß der Erfindung können bspw. 1 bis 15 Gew.-% BAC, bevorzugt bis 10 Gew.-%, 1 bis 15 Gew.-% Phenoxyethanol, bevorzugt bis 10 Gew.-% und 1 bis 15 Gew.-% "Amin", vorzugsweise 5 bis 9 Gew.-%, enthalten (bezogen auf das Gesamtgewicht des als Konzentrat vorliegenden Desinfektions- und Reinigungsmittels), wobei der Anteil an BAC gegenüber "Amin" überwiegt. Insgesamt liegt das Gemisch aus diesen wirksamen Komponenten a, b und c in einer Menge von 20 bis 35 Gew.-%, vorzugsweise 25 bis 30 Gew.-% vor. Vorzugsweise liegt das Gewichtsverhältnis von BAC gegenüber "Amin" (BAC : "Amin") dabei im Bereich von 1 : 0,10 bis 0,99, vorzugsweise im Bereich von 1 : 0,2 bis 0,8, bevorzugter im Bereich von 1 : 0,25 bis 0,7, vor allem im Bereich von 1 : 0,5 bis 0,9. Das weitgehend neutrale Ausführungsbeispiel eines erfindungsgemäßen Desinfektions- und Reinigungsmittels kann zur Einstellung des pH-Werts eine oder mehrere der vorstehend angeführten Basen und Säuren enthalten, wobei die Menge der Säure und der Base in der Regel im Bereich von 1 bis 20 Gew.-% liegt. Bevorzugt kann als Säure eine Sulfonsäure eingesetzt werden, insbesondere Amidosulfonsäure (CAS Nr. 5329-14-6). Als Base kann bspw. Kaliumhydroxid eingesetzt werden. Anstelle der oder zusätzlich zu einer Säuren und/oder einer Base können auch andere saure oder basische organische Verbindungen aus der vorstehend genannten Kategorie der Tenside oder Komplexbildner eingesetzt werden.

Optional können Tenside zu der vorstehend genannten Formulierung zugegeben werden, wobei amphotere, nicht-ionische, kationische oder anionische Tenside oder Mischungen davon eingesetzt werden können. Diese werden in einer Menge von 0 bis 10 Gew.-%, vorzugsweise 1 bis 9 Gew.-%, bevorzugter 2 bis 8 Gew.-% und insbesondere 4 bis 6 Gew.-% eingesetzt. Bevorzugt sind amphotere Tenside, z.B. von AkzoNobel Ampholak YJH-40, d.h. Octyliminodipropionat. Bevorzugt sind auch nicht-ionische Tenside des Typs FAEO, z.B. BASF Lutensol® XL 89. Aus Gründen der Unterstützung der Reinigung durch Builderwirkung und Metallkomplexierung wird dem Mittel ggf. ein Komplexbildner zugesetzt. Dieser kann aus den vorstehend genannten Arten ausgewählt werden, sofern er mit dem weitgehend neutralen Milieu kompatibel ist. Bevorzugt sind die Komplexbildner GLDA-Na4, (CAS Nr. 51981-21-6) und MGDA (CAS Nr. 164462-16-2). Der Komplexbildner wird in einer Menge von. 0 bis 10 Gew.-%, vorzugsweise 1 bis 9 Gew.-%, bevorzugter 2 bis 8 Gew.-% und insbesondere 4 bis 6 Gew.-% eingesetzt. Gegebenenfalls enthält das weitgehend neutrale erfindungsgemäße Desinfektions- und Reinigungsmittel bis zu 8 Gew.-% eines Korrosionsschutzmittels. Dieses kann in einer Menge von 2 bis 4 Gew.-%, vorzugsweise 2,5 bis 3,5 Gew.-% eingesetzt werden. Optional können Duftstoffe und Farbstoffe in einer Menge von bis zu 1 Gew.-% zu ästhetischen Zwecken eingesetzt werden. Entsprechend der Verwendung kann die vorstehend genannte Mischung aus Wirkstoffen und den optionalen Zusatzstoffen mit Wasser auf 100 Gew.-% aufgefüllt werden. In der Regel sind dies 60 bis 80 Gew.-% des fertigen erfindungsgemäßen Desinfektions- und Reinigungsmittels. Ein Teil des Wasseranteils kann mit einem weiteren der vorstehend beschriebenen Lösemittel aufgefüllt werden, um die Löseeigenschaften des neutralen Desinfektions- und Reinigungsmittels zu verbessern. Bevorzugte Lösemittel hierfür sind Alkohole und Glykole.

Die Ausführungsbeispiele der neutralen erfindungsgemäßen Desinfektions- und Reinigungsmittel können bspw. als neutrale Desinfektionsreiniger eingesetzt werden. Hierfür wird ein neutrales Ausführungsbeispiel des erfindungsgemäßen Desinfektions- und Reinigungsmittels als gebrauchsfertiges Produkt, mit einer sehr kurzen Einwirkzeit (von bevorzugt 1 - 5 min) bereitgestellt. Das erfindungsgemäße Desinfektions- und Reinigungsmittel kann ggf. mit einem geeigneten Tuchspendersystem konfektioniert werden.

Die zumindest weitgehend neutralen Desinfektions- und Reinigungsmittel gemäß der Erfindung entfalten ihre reinigende und desinfizierende Wirkung vorzugsweise als Konzentrat. Es können auch Verdünnungen nützlich verwendet werden. Die zumindest weitgehend neutralen Desinfektions- und Reinigungsmittel gemäß der Erfindung sind u.a. schnell wirksam (bei bevorzugten Einwirkzeiten von 5 - 15 min), insbesondere gegen Küchen- und Schwimmbad-spezifische Keime und wirken insbesondere bakterizid, levurozid, begrenzt viruzid (inkl. Noro-viruzid) und sind auch gegen Warzenviren wirksam. Sie weisen ferner eine hervorragende Materialverträglichkeit auf und hinterlassen keine Schlieren auf Edelstahl (selbst ohne Nachspülen), was bspw. für Anwendungen im Küchenbereich vorteilhaft ist. Ferner zeigen sie (auch ohne Nachspülen) keine Rutschgefahr auf glatten Bodenbelägen, wie z.B. Schwimmbadfliesen und sie können mit geeigneten Tuchsystemen appliziert werden.

Die weitgehend neutralen Desinfektions- und Reinigungsmittel gemäß der Erfindung werden zweckmäßig unverdünnt auf die zu behandelnden Stellen aufgetragen. Sie können aber unter Umständen auch verdünnt eingesetzt werden. Für die angestrebte Desinfektionszeit gelten folgende Richtwerte:
- Bakterizid EN 13697: 1 - 2%/5min
- Levurozid EN 13697 : 0,5 - 1 %/5min - 15min
- Mykobakterizid EN 14348: 2%/<60min
- DVV begrenzt viruzid: 1%/5min
- Warzenvirus/SV40 EN 14476: 2%/15min
- Noro EN 14476: 1 %/2h, 2%/lh
(DVV = Deutsche Vereinigung zur Bekämpfung der Viruskrankheiten)

Die erfindungsgemäßen Desinfektions- und Reinigungsmittel können insbesondere in der zumindest weitgehend neutralen Ausführungsform zur Nachbehandlung auf bereits vorgesäuberte bzw. von stark haftendem Schmutz befreiten Oberflächen, insbesondere Bodenflächen, zur Nachbehandlung aufgetragen werden, um eine Restverschmutzung zu beseitigen und gleichzeitig eine Desinfizierung zu gewährleisten.

Ein bevorzugtes Reinigungsverfahren, in dem die erfindungsgemäßen Desinfektions- und Reinigungsmittel in der zumindest weitgehend neutralen Ausführungsform zum Einsatz kommen, umfasst die nachstehenden Schritte:
- Auftragen des Mittels auf eine zu behandelnde Oberfläche durch Sprühen, Wischen (Tuch) oder bei Böden auch durch Aufbringen mit einem Automaten;
- Einwirken lassen (bei einer bevorzugten Einwirkzeit von 1 bis 5 Minuten)
- ggf. Nachspülen mit Leitungswasser, insbesondere bei Oberflächen, die mit Lebensmitteln in Kontakt kommen (ist auf Böden nicht notwendig).

Die Materialverträglichkeit der neutralen Mittel wurde für folgenden Oberflächenmaterialien mit positivem Resultat getestet:
Fliesen, Edelstahl, Metalle, Chrom, Kunststoffböden (PVC, Linoleum), Kunststoffe (POM, PP, PE, PA, Gummi, Silikon).
Die neutralen Mittel sind allerdings nur bedingt auf Buntmetalle, PMMA, PS, Polycarbonat und porösen oder saugenden Untergrundmaterialien, wie z.B. Holz anwendbar.

Die nachstehenden Beispiele, welche in **Tabelle 1** zusammengefasst und in den **Tabellen 2 bis 7** im Einzelnen angegeben sind, erläutern Ausführungsbeispiele der Erfindung. In Tabelle 1 sind dabei jeweils die wirksamen Komponenten
- a) Benzyl-C12-16-alkyldimethyl-, Chloride,
- b) N-(3-Aminopropyl)-N-dodecylpropan-1,3-diamin, und
- c) 2-Phenoxyethanol
mit ihrem jew. Gewichtsanteil (bezogen auf das Gesamtgewicht des Desinfektions- und Reinigungsmittels) sowie der Gesamtwirkstoffgehalt (also die Summe der Gewichtsanteile der wirksamen Komponenten a, b und c) aufgeführt.

### Beispiel 1

Als Ansetzwasser wird enthärtetes Leitungswasser verwendet. Die Menge errechnet sich aus der Differenz des Rohstoffgehaltes auf 100% und entspricht 50,74 Gew.-%. In folgender Reihenfolge werden nacheinander die Rohstoffe zugegeben und vermengt. 50,74 Gew.-% enthärtetes Wasser wird unter Rühren vorgelegt. 5,00 Gew.-% Methylglycindiessigsäure (MGDA-Na3), (CAS Nr. 164462-16-2) (Trilon M von BASF) werden eingestreut. Dann erfolgt die Zugabe von 14,00 Gew.-% "BAC" in Form einer 50%igen Ware, nämlich Benzyl-C12-16 -alkyldimethyl-, Chloride (CAS Nr. 68424-85-1), 11,70 Gew.-% "Amin" in Form einer 30%igen Ware, nämlich N-(3-Aminopropyl)-N-dodecylpropan-1,3-diamin (CAS Nr. 2372-82-9) und 3,50 Gew.-% 2-Phenoxyethanol (CAS Nr. 122-99-6) als Reinstoff. Nach Zumischen von 5,00 Gew.-% Kaliumhydroxid, 45%ige Lösung, 10,00 Gew.-% Octyliminodipropionat, 40%ige Lösung (Ampholak YJH-40 von AkzoNobel), 0,06 Gew.-% Farbstofflösung Basovit Gelb 232 0,1%ige Lösung wird der Ansatz noch ca. 10 Minuten gerührt. Es wird ein klares, gelbes, alkalisches Reinigungsmittel mit einem pH-Wert von >13 erhalten, das als Konzentrat oder verdünnt zu 1 bis 4 Gew.-% des Konzentrats in Flaschen, Spender oder Kanister abgefüllt wird.

### Beispiel 2a

Als Ansetzwasser wird örtliches Leitungswasser verwendet. Dieses Wasser wird mit 82,0% Gew.-% komplett in einem Produktmischer vorgelegt. Anschließend werden 8,0 Gew.-% Amidosulfonsäure (CAS Nr. 5329-14-6) portionsweise unter Rühren zugegeben. Nach einer Lösezeit von etwa 10 min. werden nacheinander 1,7 Gew.-% einer 30%igen "Amin"-Lösung, nämlich N-(3-Aminopropyl)-N-dodecylpropan-1,3-diamin (CAS Nr. 2372-82-9), 2,5 Gew.-% einer 50%igen "BAC"-Lösung, nämlich Benzyl-C 12-16 - alkyldimethyl-, Chloride (CAS Nr. 68424-85-1) und 1,5 Gew.-% 2-Phenoxyethanol (CAS Nr. 122-99-6) als Reinstoff zugegeben. Anschließend werden 4,0 Gew.-% des Korrosionsschutzmittels 2-Propyn-1-ol, propoxyliert, (CAS Nr. 38172-91-7) (Korantin PP von BASF), hinzugefügt. Danach werden 0,2 Gew-% einer 0,1%igen Farbstofflösung (BASF Iragon-Bright Pink) sowie 0,1% des Parfüms (Vögele Grapefruit - Time V/10407/1) zugegeben. Alle Rohstoffe zusammen ergeben 100%. Nach einer Mischzeit von etwa 10 min. ist der Ansatz fertig. Das Produkt liegt als gebrauchsfertige Lösung vor. Die angegebenen Gewichtsanteile beziehen sich auf das Gesamtgewicht der gebrauchsfertigen Lösung.

### Beispiel 2b

Als Ansetzwasser wird örtliches Leitungswasser verwendet. Dieses Wasser wird mit 86,3% Gew.-% komplett in einem Produktmischer vorgelegt. Anschließend werden 6,0 Gew.-% Amidosulfonsäure (CAS Nr. 5329-14-6) portionsweise unter Rühren zugegeben. Nach einer Lösezeit von etwa 10 min. werden nacheinander 1,0 Gew.-% einer 30%igen "Amin"-Lösung, nämlich N-(3-Aminopropyl)-N-dodecylpropan-1,3-diamin (CAS Nr. 2372-82-9), 1,5 Gew.-% einer 50%igen "BAC"-Lösung, nämlich Benzyl-C 12-16 - alkyldimethyl-, Chloride (CAS Nr. 68424-85-1) und 0,9 Gew.-% 2-Phenoxyethanol (CAS Nr. 122-99-6) als Reinstoff zugegeben. Anschließend werden 4,0 Gew.-% des Korrosionsschutzmittels 2-Propyn-1-ol, propoxyliert, (CAS Nr. 38172-91-7) (Korantin PP von BASF), hinzugefügt. Danach werden 0,2 Gew-% einer 0,1%igen Farbstofflösung (BASF Iragon-Bright Pink) sowie 0,1% des Parfüms (Vögele Grapefruit - Time V/10407/1) zugegeben. Alle Rohstoffe zusammen ergeben 100%. Nach einer Mischzeit von etwa 10 min. ist der Ansatz fertig. Das Produkt liegt als gebrauchsfertige Lösung vor. Die angegebenen Gewichtsanteile beziehen sich auf das Gesamtgewicht der gebrauchsfertigen Lösung.

### Beispiel 3

37,0 Gew.-% von enthärtetem örtlichem Leitungswasser werden in einem Produktmischer vorgelegt. Anschließend werden nacheinander unter Rühren 4,6 Gew.-% Amidosulfonsäure (CAS Nr. 5329-14-6), 28,0 Gew.-% einer 50%igen "BAC"-Lösung, nämlich Benzyl-C 12-16 -alkyldimethyl-, Chloride (CAS Nr. 68424-85-1), 23,1 Gew.-% einer 30%igen Amin-Lösung, nämlich N-(3-Aminopropyl)-N-dodecylpropan-1,3-diamin (CAS Nr. 2372-82-9), sowie 7,0 Gew.-% 2-Phenoxyethanol (CAS Nr. 122-99-6) als Reinstoff und 0,3 Gew.-% einer 0,1%igen Farbstofflösung (IMCD Brillantblau FCF) zugegeben. Nach einer Mischzeit von etwa 10 min. ist der Ansatz fertig. Zusammen ergeben die Rohstoffe 100%. Es wird ein neutrales Reinigungsmittel mit einem pH-Wert von 7 bis 8 erhalten, das konzentriert oder verdünnt in Flaschen, Spender oder Kanister abgefüllt wird.

### Beispiel 4:

48,7 Gew.-% von enthärtetem örtlichem Leitungswasser werden in einem Produktmischer vorgelegt. Anschließend werden nacheinander unter Rühren 4,0 Gew.-% Amidosulfonsäure (CAS Nr. 5329-14-6), 20,0 Gew.-% einer 50%igen "BAC"-Lösung, nämlich Benzyl-C 12-16 -alkyldimethyl-, Chloride (CAS Nr. 68424-85-1), 17,0 Gew.-% einer 30%igen Amin-Lösung, nämlich N-(3-Aminopropyl)-N-dodecylpropan-1,3-diamin (CAS Nr. 2372-82-9), sowie 10,0 Gew.-% 2-Phenoxyethanol (CAS Nr. 122-99-6) als Reinstoff und 0,3 Gew.-% einer 0,1%igen Farbstofflösung (IMCD Brillantblau FCF) zugegeben. Nach einer Mischzeit von etwa 10 min. ist der Ansatz fertig. Zusammen ergeben die Rohstoffe 100%. Es wird ein neutrales Reinigungsmittel mit einem pH-Wert von 7 bis 8 erhalten, das konzentriert oder verdünnt in Flaschen, Spender oder Kanister abgefüllt wird.

### Beispiel 5:

26,7 Gew.-% von enthärtetem örtlichem Leitungswasser werden in einem Produktmischer vorgelegt. Anschließend werden nacheinander unter Rühren 6,0 Gew.-% Amidosulfonsäure (CAS Nr. 5329-14-6), 20,0 Gew.-% einer 50%igen "BAC"-Lösung, nämlich Benzyl-C 12-16 -alkyldimethyl-, Chloride (CAS Nr. 68424-85-1), 27,0 Gew.-% einer 30%igen Amin-Lösung, nämlich N-(3-Aminopropyl)-N-dodecylpropan-1,3-diamin (CAS Nr. 2372-82-9), sowie 10,0 Gew.-% 2-Phenoxyethanol (CAS Nr. 122-99-6) als Reinstoff, 5,0 Gew.-% einer 40%igen Octyliminodipropionat-Lösung Octyliminodipropionat, 40%ige Lösung (Ampholak YJH-40 von AkzoNobel) sowie 5,0 Gew.-% einer 38%igen L-Glutaminsäure-N,N-diessigsäure-Lösung (GLDA Na4 flüssig, AkzoNobel Dissolvine GL-38) und 0,3 Gew.-% einer 0,1%igen Farbstofflösung (IMCD Brillantblau FCF) zugegeben. Nach einer Mischzeit von etwa 10 min. ist der Ansatz fertig. Zusammen ergeben die Rohstoffe 100%. Es wird ein neutrales Reinigungsmittel mit einem pH-Wert von 7 bis 8 erhalten, das konzentriert oder verdünnt in Flaschen, Spender oder Kanister abgefüllt wird.

**Tabelle 1**

| **Übersicht Beispiele** (Wirkstoffkomponenten) | | | **Beispiel 1** | | **Beispiel 2a** | | **Beispiel 2b** | | **Beispiel 3** | | **Beispiel 4** | | **Beispiel 5** | |
|---|---|---|---|---|---|---|---|---|---|---|---|---|---|---|
| | Name Wirkstoffkomponente | CAS | Gew% | Verhältinis bezogen auf a | | Verhältinis bezogen auf a | Gew % | Verhältinis bezogen auf a | Gew% | | | Verhältinis bezogen auf a | Gew% | Verhältinis bezogen auf a |
| a | Benzyl-C12-16-alkyldimethyl-, Chloride | 68424-85-1 | 7,00 | 1 | 1,25 | 1 | 0,75 | 1 | 14,00 | 1 | 10,001 | 1 | 10,00 | 1 |
| c | N-(3-Aminopropyl)-N-dodecylpropan-1,3-diamin | 2372-82-9 | 3,50 | 0,5 | 0,50 | 0,4 | 0,30 | 0,4 | 7,00 | 0,5 | 5,10 | 0,51 | 8,10 | 0,81 |
| b | 2-Phenoxyethanol | 122-99-6 | 3,50 | 0,5 | 1,50 | 1,2 | 0,90 | 1,2 | 7,00 | 0,5 | 10,00 | 1 | 10,00 | 1 |
| | Gesamtwirkstoffgehalt | | 14,00 | | 3,25 | | 1,95 | | 28,00 | | 25,10 | | 28,10 | |

**Tabelle 2**

| **Beispiel 1** | | | | |
|---|---|---|---|---|
| Komponente | Name Komponente | CAS | Gew.% | Verhältnis bezogen auf a |
| | Wasser | 7732-18-5 | 74,75 | |
| | Methylglycindiessigsäure (MGDA-Na3) | 164462-16-2 | 5,00 | |
| a | Benzyl-C12-16-alkyldimethyl-, Chloride | 68424-85-1 | 7,00 | 1 |
| c | N-(3-Aminopropyl)-N-dodecylpropan-1,3-diamin | 2372-82-9 | 3,50 | 0,5 |
| b | 2-Phenoxyethanol | 122-99-6 | 3,50 | 0,5 |
| | Kaliumhydroxid | 1310-58-3 | 2,25 | |
| | Octyliminodipropionat | 52663-87-3 | 4,00 | |
| | Farbstoff Basovit Gelb 232 | | <0,01 | |

**Tabelle 3**

| **Beispiel 2a** | | | | |
|---|---|---|---|---|
| Komponente | Name Komponente | CAS | Gew.% | Verhältnis bezogen auf a |
| | Wasser | 7732-18-5 | 84,65 | |
| | Amidosulfonsäure | 5329-14-6 | 8,00 | |
| a | Benzyl-C12-16-alkyldimethyl-, Chloride | 68424-85-1 | 1,25 | 1 |
| c | N-(3-Aminopropyl)-N-dodecylpropan-1,3-diamin | 2372-82-9 | 0,50 | 0,4 |
| b | 2-Phenoxyethanol | 122-99-6 | 1,50 | 1,2 |
| | 2-Propyn-1-ol, propoxyliert | 38172-91-7 | 4,00 | |
| | Farbstoff Iragon Bright Pink | | <0,01 | |
| | Parfüm | | 0,10 | |

**Tabelle 4**

| **Beispiel 2b** | | | | |
|---|---|---|---|---|
| Komponente | Name Komponente | CAS | Gew.% | Verhältnis bezogen auf a |
| | Wasser | 7732-18-5 | 87,95 | |
| | Amidosulfonsäure | 5329-14-6 | 6,00 | |
| a | Benzyl-C12-16-alkyldimethyl-, Chloride | 68424-85-1 | 0,75 | 1 |
| c | N-(3-Aminopropyl)-N-dodecylpropan-1,3-diamin | 2372-82-9 | 0,30 | 0,4 |
| b | 2-Phenoxyethanol | 122-99-6 | 0,90 | 1,2 |
| | 2-Propyn-1-ol, propoxyliert | 38172-91-7 | 4,00 | |
| | Farbstoff Iragon Bright Pink | | <0,01 | |
| | Parfüm | | 0,10 | |

**Tabelle 5**

| **Beispiel 3** | | | | |
|---|---|---|---|---|
| Komponente | Name Komponente | CAS | Gew.% | Verhältinis bezogen auf a |
| | Wasser | 7732-18-5 | 67,37 | |
| | Amidosulfonsäure | 5329-14-6 | 4,60 | |
| a | Benzyl-C12-16-alkyldimethyl-, Chloride | 68424-85-1 | 14,00 | 1 |
| c | N-(3-Aminopropyl)-N-dodecylpropan-1,3-diamin | 2372-82-9 | 7,00 | 0,5 |
| b | 2-Phenoxyethanol | 122-99-6 | 7,00 | 0,5 |
| | Farbstoff Brillantblau FCF | | 0,03 | |

**Tabelle 6**

| **Beispiel 4** | | | | |
|---|---|---|---|---|
| Komponente | Name Komponente | CAS | Gew.% | bezogen auf a |
| | Wasser | 7732-18-5 | 70,87 | |
| | Amidosulfonsäure | 5329-14-6 | 4,00 | |
| a | Benzyl-C12-16-alkyldimethyl-, Chloride | 68424-85-1 | 10,00 | 1 |
| c | N-(3-Aminopropyl)-N-dodecylpropan-1,3-diamin | 2372-82-9 | 5,10 | 0,51 |
| b | 2-Phenoxyethanol | 122-99-6 | 10,00 | 1 |
| | Farbstoff Brillantblau FCF | | 0,03 | |

**Tabelle 7**

| **Beispiel 5** | | | | |
|---|---|---|---|---|
| Kompnente | Name Komponente | CAS | Gew.% | Verhältinis bezogen auf a |
| | Wasser | 7732-18-5 | 61,97 | |
| | Amidosulfonsäure | 5329-14-6 | 6,00 | |
| a | Benzyl-C12-16-alkyldimethyl-, Chloride | 68424-85-1 | 10,00 | 1 |
| c | N-(3-Aminopropyl)-N-dodecylpropan-1,3-diamin | 2372-82-9 | 8,10 | 0,81 |
| b | 2-Phenoxyethanol | 122-99-6 | 10,00 | 1 |
| | Octyliminodipropionat | 52663-87-3 | 2,00 | |
| | L-Glutaminsäure-N,N-diessigsäure (GLDA-Na4) | 51981-21-6 | 1,90 | |
| | Farbstoff Brillantblau FCF | | 0,03 | |

## Patentansprüche

1. Flüssiges Desinfektions- und Reinigungsmittel, umfassend nachstehende Komponenten:
a) Benzyl-C₆₋₂₀-alkyldimethyl-, Chloride
b) Phenoxy-(C₁-C₈)-alkanol,
c) H₂N-R¹-N(R²)-R³-NH₂, wobei R¹ und R³ unabhängig voneinander C₂-C₅-Alkylen bedeuten und R² C₅-C₂₀-Alkyl bedeutet,
**dadurch gekennzeichnet, dass** die Gewichtsanteile von Komponente a) größer als die Gewichtsanteile von Komponente c) sind.

2. Flüssiges Desinfektions- und Reinigungsmittel nach Anspruch 1, wobei Komponente a) Benzyl-C₁₂₋₁₆-alkyldimethyl-Chlorid ist.

3. Flüssiges Desinfektions- und Reinigungsmittel nach Anspruch 1 oder 2, wobei Komponente b) Phenoxyethanol ist.

4. Flüssiges Desinfektions- und Reinigungsmittel nach einem der Ansprüche 1 bis 3, wobei Komponente c) N-(3-Aminopropyl)-N-dodecylpropan-1,3-diamin ist.

5. Flüssiges Desinfektions- und Reinigungsmittel nach einem der voranstehenden Ansprüche, wobei der pH-Wert des Desinfektions- und Reinigungsmittels kleiner als 9 und insbesondere kleiner als 5 ist.

6. Flüssiges Desinfektions- und Reinigungsmittel nach einem der Ansprüche 1 bis 4, wobei der pH-Wert größer als 9 ist.

7. Flüssiges Desinfektions- und Reinigungsmittel nach einem der Ansprüche 1 bis 4, wobei der pH-Wert zwischen 5 und 9 liegt.

8. Flüssiges Desinfektions- und Reinigungsmittel nach einem der voranstehenden Ansprüche, wobei das Verhältnis der Gewichtsanteile von Komponente c) und der Gewichtsanteile von Komponente a) zwischen 0,2 und 0,8 und bevorzugt zwischen 0,3 und 0,7 und insbesondere zwischen 0,4 und 0,6 liegt.

9. Flüssiges Desinfektions- und Reinigungsmittel nach einem der voranstehenden Ansprüche, wobei der Gewichtsanteil der Komponente a) bezogen auf das Gesamtgewicht des Desinfektions- und Reinigungsmittels im Bereich von 0,5 bis 15 %, bevorzugt im Bereich von 1 bis 15 % und insbesondere im Bereich von 10 bis 15 % liegt.

10. Flüssiges Desinfektions- und Reinigungsmittel nach einem der voranstehenden Ansprüche, wobei der Gewichtsanteil der Komponente b) bezogen auf das Gesamtgewicht des Desinfektions- und Reinigungsmittels im Bereich von 0,5 bis 15 %, bevorzugt im Bereich von 1 bis 15 % und insbesondere im Bereich von 10 bis 15 % liegt.

11. Flüssiges Desinfektions- und Reinigungsmittel nach einem der voranstehenden Ansprüche, wobei ein Gewichtsteil der Komponenten a) bis c) mit 1 bis 100 Gewichtsteilen Wasser verdünnt ist.

12. Flüssiges Desinfektions- und Reinigungsmittel nach einem der Ansprüche 1 bis 8, zur Verwendung bei der Desinfektion und Reinigung von Oberflächen.

13. Verfahren zur Herstellung eines Desinfektions- und Reinigungsmittels, wobei die Komponenten
a) Benzyl-C₆₋₂₀-alkyldimethyl-, Chloride
b) Phenoxy-(C₁-C₈)-alkanol,
c) H₂N-R¹-N(R²)-R³-NH₂, wobei R¹ und R³ unabhängig voneinander C₂-C₅-Alkylen bedeuten und R² C₅-C₂₀-Alkyl bedeutet,
mit Zusatzstoffen und einem Verdünnungsmittel in beliebiger Reihenfolge miteinander vermischt werden und die Gewichtsanteile von Komponente a) größer als die Gewichtsanteile von Komponente c) sind.

14. Verfahren nach Anspruch 13, wobei die Zusatzstoffe Säuren oder Basen zur Einstellung eines gewünschten pH-Werts umfassen.

15. Verfahren nach Anspruch 14, wobei die Zusatzstoffe weiterhin Tenside, Korrosionsschutzmittel und/oder Komplexbildner umfassen.
